(19) Europäisches Patentamt
European Patent Office
Office européen des brevets

(11) Publication number: **0 255 665 B1**

# EUROPEAN PATENT SPECIFICATION

(45) Date of publication of patent specification: **30.10.91**

(51) Int. Cl.5: **C05G 3/10**, C05C 5/04, C05G 3/00

(21) Application number: **87110689.4**

(22) Date of filing: **23.07.87**

(54) **Coating for reducing dust formation and hygroscopicity of nitrate-containing fertilizer and method for its manufacture.**

(30) Priority: **01.08.86 NO 863110**

(43) Date of publication of application:
**10.02.88 Bulletin 88/06**

(45) Publication of the grant of the patent:
**30.10.91 Bulletin 91/44**

(84) Designated Contracting States:
**AT DE ES FR GB GR IT NL SE**

(56) References cited:
**DE-A- 2 302 320**
**GB-A- 1 027 079**
**NO-B- 143 938**

(73) Proprietor: **NORSK HYDRO A/S**
**Bygdoy Allé 2**
**N-0257 Oslo 2(NO)**

(72) Inventor: **Kjohl, Olav**
**Lovsjoringen 7**
**N-3940 Heistad(NO)**
Inventor: **Obrestad, Torstein Helgen**
**N-3730 Ulefoss(NO)**
Inventor: **Pettersen, Jarl Markus**
**Sleinevn. 73**
**N-3250 Larvik(NO)**
Inventor: **Skjellaug, Per**
**Junovn. 7**
**N-3923 Skjelsvik(NO)**

(74) Representative: **Huber, Bernhard, Dipl.-Chem. et al**
**Möhlstrasse 22 Postfach 860 820**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a coating for reducing dust formation and hygroscopicity of nitrate-containing fertilizer, especially calcium nitrate, and comprising wax and mineral oil. The invention also comprises a method for manufacture of conditioned nitrate-containing fertilizer, especially calcium nitrate, having reduced hygroscopicity and dust-forming properties by application of 0,1-0,5 weight% of a coating comprising wax and mineral oil.

It has been known for a long time that hygroscopic fertilizers like NP-fertilizers and especially calcium nitrate (CN) give problems when exposed to moisture. Several coating agents for different types of fertilizers have been developed for reducing this problem. Another problem which might arise, especially during handling of the fertilizer, is dust formation. There can be several reasons for this dust formation, for instance that the fertilizer particles are uneven. Due to the abration the particles are exposed to during handling this roughness will wear off, and thereby is dust formed. There are also developed some coating for reducing dust formation, but these coatings must to a great extent be adjusted according to the type of fertilizer which shall be treated.

As mentioned above, calcium nitrate gives special problems because of its hygroscopicity, but in addition to that one has experienced that dust formation can also be a problem. It has been found that even the way of producing calcium nitrate can influence the product's tendency for dust formation during handling. Thus it was found, by changing from production by prilling to granulation, that problems with dust formation arose. The reason for this is primarily due to the fact that granulated CN has a more uneven surface than the corresponding prilled product. The friction forces between the particles and impact against walls etc. during handling, application of mechanical equipment like conveyors, grabbing means, loading/unloading equipment etc. results in extensive wear of the particles and thereby dust formation.

The applicant has been able to substantially reduce absorption of moisture (water) to hygroscopic fertilzers like calcium nitrate when this problem is related to the product's hygroscopicity. This is further described in Norwegian patent No. 143.938. The patent relates to application of a coating containing 5-20 weigh% microcrystalline wax, 5-30 weight% paraffin wax and 60-80 weight% mineral oil having a boiling point of 300-400° C. When this coating is used, moisture absorption is reduced by e.g. about 70% at 25° C and 70% relative humidity. However, it has been found that application of this coating does not solve the problem related to dust formation, even when the coating is applied in relatively large amounts. The dust formation might be reduced when sufficiently large amounts of coating are used, but then the fertilizer particles will become sticky. Further, thus coated particles will be too expensive.

Known coatings for preventing dust formation have not been found suitable because they do not solve the problem of moisture absorption.

The object of the present invention was to arrive at a method for manufacturing nitrate-containing fertilizers having a low absorption of moisture and low tendency for dust formation. A further object was to arrive at a coating which reduced both moisture absorption and dust formation.

The inventors firstly chose to study the problems related to CN, as solving the problems related to CN was considered more difficult than for other actual fertilizer types.

One started by defining which requirements a coating for CN should meet and ended up with the following requirements:

1. The coating should give the particles a smooth surface such that only minor amounts of dust were formed during bulk handling. However, the particles should not be made so smooth that the sliding angle became less than 28°.

2. The coating should reduce the moisture absorption of the particles substantially. The minimum requirement chosen was that the new coating should be at least as effective as the coating according to the above mentioned Norwegian patent.

3. Coated CN-particles should be completely dissolved at least three days subsequent to spreading at day temperatures of 10-15° C and a humidity of 6-10 mm Hg. Fulfillment of this requirement is considered necessary from an agronomic point of view.

4. The coating should not be poisonous and should be degradable in the soil.

Then one tried to select possible coatings which could meet the above requirements and started testing them.

One started to test aqueous based coating material, for instance water glass (sodium ortho silicate, $Na_4SiO_4$) which was polymerized by means of $CO_2$-gas. However, the result was negative because hardening occurred and subsequent lump formation. Accordingly, it was no sense in carrying on with this type of coating.

It is known that in certain cases polymers can give suitable coatings on fertilizer particles and one chose to test out one based on polyethylene glycol which is commercially available with a molecular weight of 200-15000. CN was conditioned by polyethylene glycol having an average molecular weight of 6000 as this polymer is soluble in water at room temperature. Spraying of the coating on warm CN-particles caused no problem, but during cooling to storage temperature the particles hardened together and one had to use mechanical means for breaking the formed crust. Testing of such coated CN with regard to dust formation showed that the dusting was unacceptably high. It was concluded that this coating was unsuitable due to its low reduction of dust formation and also due to the experienced hardening problems.

From British patent No. 1.479.455 it is known to apply polymers as coating on fertilizer particles. It is applied up to 0,5 weight% polyalkylene and mineral or vegetable oil or wax in amounts of at least 40 weight% of the coating. The coating can also contain longchained alifatic amin. Preferred polyalkylene is polyethylene wax having an average molecular weight of 2500-10000 and a degree of branching of 10-100 $CH_3$ groups per 1000 C atoms. The coating agent can also contain organic solvents. The patent states that the coating reduces dusting, but does not mention anything about hygroscopicity. Reduction of moisture absorption is not tested and this seems logical as the coating preferably shall contain up to 10 weight% amin. It has namely been found that amin will destroy the coating's ability to reduce moisture absorption and a coating containing amin is therefore not suitable for conditioning CN. The high molecular polyethylene which the patent recommendes will also be unsuitable because the coating will be too hard and brittle.

During the further research one first tried to modify the coating which one knew would reduce the water absorption, i.e. the coating according to the above mentioned Norwegian patent. In a test run the oil content was reduced and the wax content increased, but this did not improve the coating with regard to reducing dust formation.

The essential features of the invention are the subject-matter of independent claims 1 and 3; preferred features are the subject-matter of dependent claims 2 and 4.

The inventors tried to select some polymers in view of the requirements to the coating looked for in view of general statements that polymers are suitable for reducing dust formation to some type types of fertilizers. It was soon found that polymers alone could not meet the requirements, however, by mixing these with other components it seemed that one was on the right track. On obtained for instance good results with copolymers of polyethylene and polyvinyl acetate mixed with paraffin wax, but the mixture had to be heated to 200°C before forming one phase and the system became viscous even at high temperature.

Oxidized polyethylene mixed with wax seemed at first to reduce dust formation when it was applied at high temperature, but one obtained poor results if the coating was applied on CN-particles having the most actual temperature for coating. In addition this coating resulted in minor reduction of moisture absorption. It was therefore no purpose in further testing of this system.

The inventors then tried a simple, low molecular polymer mixed with paraffin wax as these two components should be easily mixable as their structure is quite similar. But even this mixture could not meet the requirements. Then one tried to add oil without succeeding completely even though the oil seemed to improve the coating. Further investigation of the type of wax to be used showed that microcrystalline wax, polyethylene wax and oil gave a promising coating. Tests showed that microcrystalline wax together with polyethylene wax resulted in a crystal structure which is capable of keeping the oil within the solidified system and in addition one obtains a pliable, elastic coating which does not crack or leave the coated fertilizer particles during handling of these.

These tests were so promising that complete testing of several different compositions of the system was started in order to establish the effect of the coating with regard to dust formation and reduction of moisture absorption.

Polyethylene wax having an average molecular weight >75000 was first tested, but the results with regard to dust formation were poor. The coating seemed hard and brittle and the reduction in moisture absorption was not acceptable even when the particles in addition got an extra coating for reducing the moisture absorption.

Then tests were carried out with a coating consisting of 10 weight% polyethylene wax having an average molecular weight of 2000, 40 weight% microcrystalline wax and 50 weight% heavy oil destillate. This coating was sprayed at about 90°C on CN-particles having a temperature of 45°C. Polyethylene having a molecular weight of 1500-3000 and a high degree of branching seemed to be the most suitable one.

The particles seemed to get an even film of coating which subsequent to solidification was elastic. If the oil component was excluded, the mixture solidified before an even film on all particles was obtained and then the coating often became brittle.

Testing of thus coated particles showed that the coating reduced the moisture absorption by about 50% compared to unconditioned particles and dust formation to about 30% by applying 0,15-0,2 weight% coating. Thus the reduction with regard to dust formation was promising, but reduction of moisture absorption was too poor.

The moisture absorption properties were tested in the following way:

Conditioned CN was placed in a monolayer on a dish and the weight increase due to moisture absorption was measured at 60% relative humidity and 25° C.

The dust formation properties were measured in the following way:

Coated particles were fluidized by air in a spouting bed apparatus placed in an artificial climatic chamber having a relatively low humidity. The dust particles were transferred out of the apparatus by the fluidizing air and collected in a filter bag. As the air velocity in the dust/particle separation zone is known, the particles which are collected in the bag will be less or equal to 100 micrometres at the test conditions. This dust is formed during application of the coating or it has been present beforehand. In the following tables it is stated as "Dust 1", and acceptable level is 100 mg per kg particles.

In order to simulate wear which the particles are exposed to during handling a tilting test is used. The coated particles, which first were dedusted in the spouting bed apparatus, were then allowed to float/fall freely from one glass container to another one through a 0,6 m long plastic tube. This tilting process was repeated 20 times and the dust formed was determined and the amount stated as mg dust per kg particles. In the following tables this dust is stated as "Dust 2", and acceptable level is 300 mg/kg.

Reduction of moisture absorption had previously been obtained by applying a coating according to the previously mentioned Norwegian patent and the question now was if one could apply such a coating and make it stick to the previously mentioned new coating without destroying its effect. Such experiments were carried out and it was then surprisingly found that one obtained far greater effect than expected from pure additive considerations both with regard to reduction in moisture absorption and dust formation. By further developing the system and the method of applying the coating, one could also obtain a coating which either was applied in one or two steps and which in both cases were based on the two previously mentioned coatings. Preferably the same type of oil was used in both coatings.

The invention is as defined in the attached patent claims.

The invention will be further explained in the following examples.

Example 1

In this example the results are shown of a series of tests for establishing optimal relative amounts of polyethylene, microwax and oil in the first coating which here will be defined as coating A. The amounts of the components are stated in weight%.

| Polyethylene | Wax | Oil | Dust | Quality: water absorp. | Surface |
|---|---|---|---|---|---|
| 20 | 80 | 0 | good[x)] | poor | good |
| 30 | 0 | 70 | good | poor | sticky |
| 40 | 70 | 0 | poor | poor | good |
| 5-20 | 15-70 | 30-65 | satisfact. | satisfact. | satisfact. |
| 10 | 40 | 50 | excellent | excellent | excellent |

[x)] Excellent, provided that the fertilizer has a high temperature when the coating is applied.

After further testing one ended up with the following relative composition as the best recipe:
polyethylene 5-15, wax 30-50 and oil 40-60

Example 2

This example shows the results of a series of tests where CN-particles were coated by a coating of a type which is described in Example 1 and another coating according to Norwegian patent No. 143.938, here defined C.

CN-particles having a temperature of 40-45° C were supplied to a rotating drum and coating A was sprayed on the particles. Coating A consisted of 10 weight% polyethylene wax having an average molecular weight of 2000, 40 weight% microcrystalline wax having a melting point of about 60° C and 50 weight% heavy oil destillate having a boiling point of 350° C. The temperature of the coating during application was about 90°C. The coating had a solidification point of about 60°C.

Instead of coating A one can use a coating B having 10 weight% polyethylene wax of average molecular weight 1700, 40 weight% microcrystalline wax and 50 weight% oil.

CN-particles were then coated with a coating C one minute after applying coating A or B. Coating C consisted of 15 weight% microcrystalline wax, 15 weight% paraffin wax and 70 weight% heavy oil destillate.

The results for reduction in moisture absorption and dust formation for CN-particles are compared with unconditioned particles and particles conditioned with only coating C.

The table shows the effect of microwax, as coating D is a coating of polyethylene and oil without microwax.

The results of these tests are shown in table 1.

### Tabell 1

| Coating system Coating 1 | Coating 2 | Reduction of water absorp. % | Dust 1 mg/kg | Dust 2 mg/kg |
|---|---|---|---|---|
| 0,2 % A | 0 | 50-60 | 100-200 | 350-500 |
| 0,3 % A | 0 | 50-60 | 100-200 | 300-450 |
| 0,2 % A | 0,1 % C | 80-90 | 10-70 | 50-200 |
| 0,15 % A | 0,1 % C | 80-85 | 10-100 | 100-250 |
| 0,2 % B | 0,1 % C | 85 | 10-70 | 50-200 |
| 0,2 % D | 0,1 % C | 60-70 | 10-70 | 50-240 |
| 0,15 % C | 0,1 % C | 90-95 | 100-200 | 450-900 |
| 0,15 % C | | 80-90 | 200-350 | 600-1200 |
| 0,2 % C | | 90 | 100-300 | 450-900 |
| 0,3 % C | | 95 | 100-300 | 450-800 |
| Unconditioned | | 0 | 400-700 | 1300-2100 |

The relative amounts between coating A (B) and C will to a great extent be of a practical nature. Too much of coating C will give sticky particles. Too much of coating A (B) will certainly reduce the dust formation substantially, but this will be at the expense of the reduction in water absorption and will further be too expensive.

Example 3

This example shows coating of CN-particles which are coated in one step by coating A and C.

Table 2

| Coating system | %A | %C | Reduction of water absorp. % | Dust 1 | Dust 2 |
|---|---|---|---|---|---|
| 0,2% (A + C) | 50 | 50 | 89 | 150 | 360 |
| 0,2% C | 0 | 100 | 93 | 240 | 560 |
| Unconditioned | 0 | 0 | 0 | 700 | 2100 |

Example 4

This example shows coating of calcium ammonium nitrate (CAN) and urea calcium nitrate (UCN).

EP 0 255 665 B1

## Table 3

| | Coating system Coating 1  Coating 2 | Reduction of water absorp. % | Dust 1 mg/kg | Dust 2 mg/kg2 |
|---|---|---|---|---|
| CAN | 0,2% A    0,1% C Unconditioned | 0 | 0-20 20-50 | 0-150 100-300 |
| UCN | 0,2% A    0,1% C Unconditioned | 75-85 0 | 0-20 100-200 | 0-100 300-400 |

As can be seen from the above examples, one has for different types of nitrate-containing fertilizers obtained substantial reduction both in dust formation and hygroscopicity by application of the present invention. It seems that the greatest effect obtained is when the coating is applied in two steps and at a recess of 30-150 seconds between each coating step. If said recess is more than 150 seconds, it sometimes seems difficult to obtain efficient addition between the two coatings. Too short recess can prevent that the first coating is well adhered to the particles and this implies that the particles actually will be coated by a mixture of the two coatings. However, it is an advantage both economically and for manufacturing purposes to carry out the coating process in one step, and the effect of such coating has been found acceptable and better than for known coatings. By one step coating one should use 60-80 weight% mineral oil in the coating and as much as 20-30 weight% microwax, inter alea in order to retain the oil, while it is sufficient to use 2-15 weight% paraffin wax and 2-10 weight% polyethylene wax.

## Claims

1. Coating for reducing dust formation and hygroscopicity of nitrate-containing fertilizer, especially calcium nitrate, and comprising wax and mineral oil,
**characterized in that**
the coating contains 2-10 weight% polyethylene wax having an average molecular weight of 1500-3000, 20-35 weight% microcrystalline wax having a melting point of 50-70°C, 2-15 weight% paraffin wax having a melting point of 50-70°C and 60-80 weight% mineral oil having a boiling point of 300-400°C.

2. Coating according to claim 1,
**characterized in that**
the coating is a 2-component coating which is applied in two steps, and that the first coating consists of 5-15 weight% polyethylene wax, 30-50 weight% microcrystalline wax and 40-60 weight% mineral oil having a boiling point of 300-400°C and that the other coating is a coating comprising 5-20 weight% microcrystalline wax, 5-30 weight% paraffin wax and 60-80 weight% mineral oil having a boiling point of 300-400°C, and that the relation between the first and second coating is 2-1:1.

3. Method for manufacture of conditioned nitrate-containing fertilizer, especially calcium nitrate, having reduced hygroscopicity and dust formation by application of 0.1-0.5 weight% of a coating comprising wax and mineral oil,
**characterized in that**
the fertilizer particles having a temperature of 25-60°C, preferably 40-45°C, is sprayed by a coating containing 2-10 weight% polyethylene wax having an average molecular weight of 1500-3000, 20-35 weight% microcrystalline wax with a melting point of 30-70°C, 2-15 weight% paraffin wax with a melting point of 50-70°C and 60-80 weight% mineral oil having a boiling point of 300-400°C.

4. Method according to claim 3,
**characterized in that**
the coating is applied in two steps, as the fertilizer particles first are coated by 0.05-0.25 weight% of a

6

coating containing 5-15 weight% polyethylene wax, 30-50 weight% microcrystalline wax and 40-60 weight% mineral oil having a boiling point of 300-400°C and that the fertilizer particles thereupon after 30-150 seconds is coated additionally by a coating in an amount of 0.05-0.25 weight%, and that the second coating consists of 5-20 weight% microcrystalline wax, 5-30 weight% paraffin wax and 60-80 weight% mineral oil having a boiling point of 300-400°C.

## Revendications

1. Revêtement pour réduire la formation de poussière et d'hygroscopicité d'engrais contenant du nitrate, notamment du nitrate de calcium, ce revêtement comprenant de la cire et de l'huile minérale et étant caractérisé en ce que le revêtement contient 2 à 10 % en poids de cire de polyéthylène, ayant un poids moléculaire moyen de 1 500 à 3 000, 20 à 35 % en poids de cire microcristalline ayant un point de fusion de 50 à 70 °C, 2 à 15 % en poids de cire de paraffine ayant un point de fusion de 50 à 70 °C et 60 à 80 % en poids d'huile minérale ayant un point d'ébullition de 300 à 400 °C.

2. Revêtement selon la revendication 1, caractérisé en ce que le revêtement est un revêtement à deux composants, qui est appliqué en deux étapes, et en ce que le premier revêtement consiste en 5 à 15 % en poids de cire de polyéthylène, 30 à 50 % en poids de cire microcristalline et 40 à 60 % d'huile minérale ayant un point d'ébullition de 300 à 400 °C, et en ce que l'autre revêtement est un revêtement comprenant 5 à 20 % en poids de cire microcristalline, 5 à 30 % en poids de cire de paraffine et 60 à 80 % en poids d'huile minérale ayant un point d'ébullition de 300 à 400 °C, et en ce que le rapport entre le premier revêtement et le second revêtement est de 2-1 pour 1.

3. Procédé de fabrication d'un engrais "conditionné" contenant du nitrate, notamment du nitrate de calcium et ayant une hygroscopicité réduite et présentant moins de formation de poussière, par application de 0,1 à 0,5 % en poids d'un revêtement comprenant de la cire et de l'huile minérale, procédé caractérisé en ce qu'on projette par pulvérisation sur les particules de l'engrais, qui ont une température de 25 à 60 °C, de préférence de 40 à 45 °C, un revêtement contenant 2 à 10 % en poids de cire de polyéthylène ayant un poids moléculaire moyen de 1 500 à 3 000, 20 à 35 % en poids de cire microcristalline ayant un point de fusion de 30 à 70 °C, 2 à 15 % en poids de cire de paraffine ayant un point de fusion de 50 à 70 °C et 60 à 80 % en poids d'une huile minérale ayant un point d'ébullition de 300 à 400 °C.

4. Procédé selon la revendication 3, caractérisé en ce qu'on applique le revêtement en deux étapes, en soumettant tout d'abord les particules de l'engrais à un revêtement par 0,05 à 0,25 % en poids d'un revêtement d'enrobage contenant 5 à 15 % en poids de cire de polyéthylène, 30 à 50 % en poids de cire microcristalline et 40 à 60 % en poids d'une huile minérale ayant un point d'ébullition de 300 à 400 °C et en ce qu'après 30 à 150 s, on soumet les particules d'engrais à un enrobage supplémentaire par un revêtement utilisé en une quantité de 0,05 à 0,25 % en poids, et en ce que le second revêtement consiste en 5 à 20 % en poids de cire microcristalline, 5 à 30 % en poids de cire de paraffine et 60 à 80 % en poids d'une huile minérale ayant un point d'ébullition de 300 à 400 °C.

## Patentansprüche

1. Überzug zur Reduzierung der Staubbildung und Hygroskopizität von Nitrat enthaltendem Düngemittel, insbesondere Calciumnitrat, umfassend Wachs und Mineralöl, dadurch gekennzeichnet, daß der Überzug 2 bis 10 Gew. % Polyethylenwachs mit einem mittleren Molekulargewicht von 1500-3000, 20-35 Gew. % mikrokristallines Wachs mit einem Schmelzpunkt von 50-70°C, 2-15 Gew. % Paraffinwachs mit einem Schmelzpunkt von 50-70°C und 60-80 Gew. % Mineralöl mit einem Siedepunkt von 300-400°C enthält.

2. Überzug nach Anspruch 1, dadurch gekennzeichnet, daß der Überzug ein 2-Komponentenüberzug ist, der in zwei Stufen appliziert wird, und der erste Überzug aus 5-15 Gew. % Polyethylenwachs, 30-50 Gew. % mikrokristallinem Wachs und 40-60 Gew. % Mineralöl mit einem Siedepunkt von 300-400°C besteht, und der andere Überzug ein Überzug ist, der 5-20 Gew. % mikrokristallines Wachs, 5-30 Gew. % Paraffinwachs und 60-80 Gew. % Mineralöl mit einem Siedepunkt von 300-400°C umfaßt, und das Verhältnis zwischen dem ersten und zweiten Überzug 2-1:1 ist.

3. Verfahren zur Herstellung von konditioniertem Nitrat enthaltendem Düngemittel, insbesondere Calciumnitrat, mit verringerter Hygroskopizität und Staubbildung durch Applikation von 0.1-0.5 Gew. % eines Überzüges, der Wachs und Mineralöl umfaßt, dadurch gekennzeichnet, daß die Düngemittelteilchen mit einer Temperatur von 25-60° C, vorzugsweise 40-45° C, mit einem Überzug besprüht werden, der 2-10 Gew. % Polyethylenwachs mit einem mittleren Molekulargewicht von 1500-3000, 20-35 Gew. % mikrokristallines Wachs mit einem Schmelzpunkt von 30-70° C, 2-15 Gew. % Paraffinwachs mit einem Schmelzpunkt von 50-70° C und 60-80 Gew. % Mineralöl mit einem Siedepunkt von 300-400° C enthält.

4. Verfahren nach Anspruch 3, dadurch gekennzeichnet, daß der Überzug in zwei Stufen appliziert wird, wobei die Düngemittelteilchen zuerst mit 0.05-0.25 Gew. % eines Überzuges überzogen werden, der 5-15 Gew. % Polyethylenwachs, 30-50 Gew. % mikrokristallines Wachs und 40-60 Gew. % Mineralöl mit einem Siedepunkt von 300-400° C enthält, und die Düngemittelteilchen dann nach 30-150 Sekunden zusätzlich mit einem Überzug in einer Menge von 0.05-0.25 Gew. % überzogen werden, wobei der zweite Überzug aus 5-20 Gew. % mikrokristallinem Wachs, 5-30 Gew. % Paraffinwachs und 60-80 Gew. % Mineralöl mit einem Siedepunkt von 300-400° C besteht.